# EUROPÄISCHE PATENTANMELDUNG

(11) **EP 1 013 617 A2**
(43) Veröffentlichungstag der Anmeldung: **28.06.2000**
(21) Anmeldenummer: 99125790.8
(22) Anmeldetag: 23.12.1999
(51) Int. Cl.: C03B 11/00

(54) **Verfahren und Vorrichtung zur Herstellung von Glasartikeln**

(30) Priorität: 24.12.1998 DE 19860346
(71) Anmelder: Lindner W. Maschinen GmbH, 94481 Grafenau-Reismühle (DE)
(72) Erfinder: Lindner, Walter, 94519 Spiegelau (DE)
(74) Vertreter: Manitz, Finsterwald & Partner

(57) **Zusammenfassung**

Es wird ein Verfahren zur Herstellung vorwiegend großer und schwerer Glasartikel mittels mehrerer parallel betriebener Fertigungslinien beschrieben, wobei bei einem Artikelwechsel unter Fortführung des Betriebs der übrigen Fertigungslinien die Einstellung des neuen Glastropfengewichts der betroffenen Linie in einem Schritt oder in einer Mehrzahl von Annäherungsschritten durchgeführt wird und die dem gewechselten Artikel zugeordnete Fertigungslinie dann wieder in Betrieb genommen wird, wenn das neue Glastropfengewicht erreicht ist.

## Beschreibung

Die Erfindung betrifft ein Verfahren zur Herstellung von Glasartikeln, insbesondere von großen und schweren Glasartikeln, bei dem zumindest zwei eine Presse mit oder ohne nachgeschalteter Feuerpoliermaschine umfassende Fertigungslinien parallel zueinander betrieben und von einem Feeder mit Glas-tropfen gespeist werden. Ferner ist die Erfindung auf eine Vorrichtung zur Durchführung dieses Verfahren gerichtet.

Zur automatischen Herstellung von Glasartikeln werden üblicherweise Vorrichtungen bzw. Anlagen verwendet, bei denen jeder Fertigungslinie ein eigener Feeder zugeordnet ist, der die für den jeweils gefertigten Artikel benötigten Glastropfen eines bestimmten Gewichts liefert.

Aufgabe der Erfindung ist es, ein Verfahren der eingangs angegebenen Art so auszugestalten, daß bei hoher Glasqualität mit hoher Flexibilität Glasartikel unterschiedlichen Gewichts bei kurzen Artikelwechselzeiten mit hoher Produktivität hergestellt werden können.

Gelöst wird diese Aufgabe nach der Erfindung im wesentlichen dadurch, daß der den Fertigungslinien gemeinsame zentrale Feeder die einzelnen Fertigungslinien aufeinanderfolgend und artikelbezogen mit Glastropfen unterschiedlichen Gewichts beschickt, daß bei einer durch Artikelwechsel bedingten Änderung des Glastropfengewichts für eine Fertigungslinie die übrigen Fertigungslinien unverändert im bisherigen Takt mit dem jeweils geforderten Glastropfengewicht gespeist werden, daß die Einstellung des neuen Glastropfengewichts in einem Schritt oder in einer Mehrzahl von Annäherungsschritten unter Bildung von Fehlportionen durchgeführt wird, und daß die dem gewechselten Artikel zugeordnete Fertigungslinie dann wieder in Betrieb genommen wird, wenn das neue Glastropfengewicht erreicht ist.

Nach dem erfindungsgemäßen Verfahren läuft demgemäß bei einem Artikelwechsel in einer Fertigungslinie die zweite Fertigungslinie und eventuelle weitere Fertigungslinien mit dem eingestellten Zyklus und dem jeweils eingestellten Glasgewicht weiter. Über die Tastatur einer Elektronik wird dem zentralen Feeder mitgeteilt, welches neue Glasgewicht für den neuen Artikel auf der vorübergehend außer Betrieb gesetzten Fertigungslinie bereitzustellen ist. Das neue Tropfengewicht wird dabei zunächst nur anhand mathematischer Gesetzmäßigkeiten eingestellt, und zwar durch den über einen Computer angesteuerten Plunger des Feeders, wobei dieser Plunger an seiner Außenseite ein Fördergewinde besitzt und hinsichtlich Hub, Drehzahl und Drehrichtung steuerbar ist.

Über einen Schritt oder mehrere Einzelschritte wird durch entsprechende Ansteuerung des Plungers das Glastropfengewicht dem neu gewünschten Sollgewicht angenähert und nach weitestgehender Annäherung an das Sollgewicht ein Tropfen aufgefangen und gewogen. Das dabei ermittelte Ist-Gewicht des Tropfens wird in die Feedersteuerung eingespeist, und diese regelt dann wiederum entsprechend mathematischer Gesetzmäßigkeiten nach. Bei nur kleinen Abweichungen zwischen dem Sollgewicht und dem Istgewicht kann die betroffene Fertigungslinie sofort wieder in Betrieb gesetzt werden, bei größeren Abweichungen zwischen dem Sollgewicht und dem durch Wiegen ermittelten Tropfengewicht wird vorzugsweise vor Aufnahme des Betriebs der Fertigungslinie noch eine weitere Wiegung vorgenommen.

Wesentlich für das erfindungsgemäße Verfahren ist auch, daß die von den verschiedenen Fertigungslinien produzierten Artikel jeweils gewogen werden und in Abhängigkeit vom Wiegeergebnis ggf. eine Änderung der Feedereinstellwerte vollautomatisch von der Steuerelektronik vorgenommen wird. Dies stellt sicher, daß Veränderungen der Glastemperatur im Feederkanal, die sich bei einer Änderung der Glastropfengewichte bzw. bei einer Durchsatzänderung ergeben, keine Auswirkungen auf die Produktion der unverändert weiterlaufenden Fertigungslinien haben, wenn in einer Fertigungslinie eine Umstellung vorgenommen wird.

Das Wiegen der Artikel der einzelnen Fertigungslinie erfolgt vorzugsweise in einer ersten Station einer Feuerpoliermaschine mittels einer Wiegezelle, die jeweils sofort das ermittelte Gewicht des gerade aus der Presse kommenden Artikels dem Zentralcomputer übermittelt, der für die Feedersteuerung verantwortlich ist. Wird beispielsweise eine Abweichung vom Sollgewicht festgestellt, regelt die Computersteuerung sofort nach.

Zur Ausnutzung der höchstzulässigen Schmelzkapazität des die einzelnen Fertigungslinien speisenden Ofens wird gemäß der Erfindung die Belegung der einzelnen Fertigungslinien mit Artikeln unterschiedlichen Gewichts in Abhängigkeit von der Schmelzkapazität, insbesondere der höchstzulässigen Schmelzkapazität des Ofens vorgenommen, wobei es auch möglich ist, zumindest eine Fertigungslinie abzustellen und nur die verbleibenden weiterlaufen zu lassen. Auf diese Weise kann jeder Ofen technisch und wirtschaftlich optimal genutzt werden.

Weitere Ausgestaltungen des Verfahrens nach der Erfindung sind in Unteransprüchen angegeben.

Eine vorteilhaft verwendbare Anlage zur Durchführung des Verfahrens nach der Erfindung ist gekennzeichnet durch eine Speisestation mit einem einen steuerbaren Plunger mit Außengewinde aufweisenden Feeder und einer Mehrzahl von insbesondere sternförmig um den Feeder verteilt angeordneten Fertigungslinien mit jeweils einer Einzel-Preßmaschine und nachgeordneter Feuerpoliermaschine, wobei jede Einzel-Preßmaschine einen Schiebetisch für die jeweilige Form aufweist und die Form mittels des linear bewegbaren Schiebetisches zentrisch unter den Feeder und nach dem direkten Einspeisen des Glastropfens in die Form in die Preßposition sowie anschließend in eine Entnahmeposition verfahrbar ist.

Von besonderem Vorteil ist im Zusammenhang mit dieser Vorrichtung nicht nur die Verwendung eines einzigen und zentralen Feeders für mehrere Fertigungslinien, sondern auch die Tatsache, daß die Formen der einzelnen Fertigungslinien aufgrund der Ausgestaltung der Einzel-Preßmaschine unmittelbar unter den Feeder verfahren werden können, so daß dort der jeweilige Glastropfen direkt und ohne Umlenkrinne in die Form eingespeist werden kann.

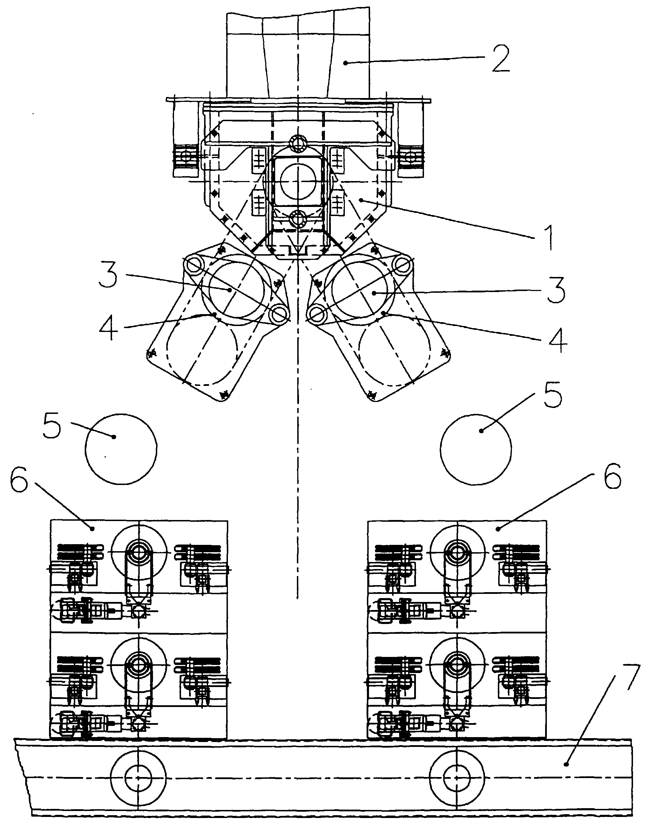

Die Erfindung wird nachfolgend anhand eines Ausführungsbeispiels unter Bezugnahme auf die Zeichnung erläutert; die einzige Figur der Zeichnung zeigt eine Draufsicht auf eine erfindungsgemäß ausgebildete Vorrichtung mit zwei Fertigungslinien für große und schwere Glasartikel unterschiedlichen Gewichts.

Die in der Zeichnung schematisch dargestellte Vorrichtung umfaßt einen Feeder 1, der über einen Glaszuführkanal 2 gespeist ist.

Diesem Feeder 1 sind im gezeigten Ausführungsbeispiel zwei Fertigungslinien zugeordnet, die jeweils eine Einzel-Preßmaschine 3 und eine Feuerpoliermaschine 6 umfassen, wobei zwischen Einzel-Preßmaschine 3 und Feuerpoliermaschine 6 in jeder Fertigungslinie eine Übergabeeinheit angeordnet ist, die den Artikel von der Presse über eine Kühlstation in die Feuerpoliermaschine übergibt und die aus einem handelsüblichen Roboter bestehen kann.

Ein gemeinsames Förderband 7 dient zur Aufnahme der in den verschiedenen Fertigungslinien hergestellten Artikel.

Jede Einzel-Preßmaschine 3 ist mit einem linear verfahrbaren Schiebetisch 4 zur Aufnahme der jeweiligen Form ausgestattet, und mittels dieses Schiebetisches 4 kann die Form direkt unterhalb die Ausstoßöffnung des Feeders 1 zur direkten Aufnahme des jeweiligen Glastropfens gefahren werden. Die mittlere Position des Schiebetisches 4 ist der Preßstation zugeordnet, und ausgehend von der Preßstation ist die Form mittels des Schiebetisches noch in eine Entnahmeposition verfahrbar, die im Erfassungsbereich der Übergabeeinheit oder des Roboters 5 gelegen ist.

Mit einer Vorrichtung der gezeigten Art und unter Verwendung des erfindungsgemäßen Verfahrens ist es möglich, gleichzeitig auf einer Fertigungslinie Artikel mit einem Gewicht von beispielsweise 2 kg und auf einer anderen Fertigungslinie andere Artikel mit einem Gewicht von beispielsweise 3 kg herzustellen und bei dieser vollautomatischen Produktion mit geringsten Formenkosten Artikel höchster Qualität zu erzeugen. Die Vorrichtung eignet sich insbesondere auch für kleine Sehen und kleine Losgrößen, da es gerade bei solchen Fertigungsaufgaben von Bedeutung ist, daß die Artikelwechselzeiten sehr gering gehalten werden können. Dies ist im Rahmen der Erfindung möglich, da in einer Fertigungslinie die Form gewechselt werden kann, während die anderen Linien ganz normal weiterproduzieren und in der Zeit, in der die Form gewechselt wird, sich der Feeder bereits auf das Gewicht für den neuen Artikel einregeln kann.

Jeder Glasschmelzofen besitzt eine bestimmte Schmelzkapazität, wobei es zum Teil aus technischen, vorwiegend jedoch aus wirtschaftlichen Gründen anzustreben ist, die höchstzulässige Schmelzkapazität des jeweiligen Ofens zu nutzen, bei der das Glas noch eine einwandfreie Qualität besitzt. An jedem Ofen befinden sich üblicherweise mehrere Stellen, an denen Glas entnommen wird. Jede dieser Stellen benötigt eine bestimmte Menge von Glas, die je nach Arbeitsgeschwindigkeit, Artikelgewicht und dergleichen sehr stark variieren kann. Es besteht daher stets das Problem, die Produktion an den einzelnen Werkstellen so zu verteilen, daß die optimale Schmelzkapazität des jeweiligen Ofens weitgehend ausgenutzt wird.

Durch die vorstehend geschilderten Maßnahmen ist es im Zusammenhang mit der Erfindung möglich, einen Betrieb des jeweiligen Ofens unter Ausnutzung der optimalen bzw. höchstzulässigen Schmelzkapazität, bei der das Glas noch eine einwandfreie Qualität besitzt, zu gewährleisten, indem dann, wenn die optimale Schmelzkapazität bei Betrieb aller Fertigungslinien bzw. beim Einsatz aller Maschinen und Werkstellen überschritten wird, eine Fertigungslinie oder mehrere Fertigungslinien mit Artikeln belegt werden, die geringere Gewichte aufweisen und/oder sogar eine oder mehrere Fertigungslinien abzustellen und nur die Produktion auf den verbleibenden Fertigungslinien weiterlaufen zu lassen.

### Bezugszeichenliste

- 1: Feeder
- 2: Glasspeisekanal
- 3: Einzel-Preßmaschine
- 4: Schiebetisch
- 5: Übergabeeinheit / Roboter
- 6: Feuerpoliermaschine
- 7: Transporthand

## Patentansprüche

1. Verfahren zur Herstellung von Glasartikeln, insbesondere von großen und schweren Glasartikeln, bei dem zumindest zwei eine Presse mit vorzugsweise nachgeschalteter Feuerpoliermaschine umfassende Fertigungslinien parallel zueinander betrieben und von einem Feeder mit Glastropfen gespeist werden,
dadurch **gekennzeichnet,**
daß der den Fertigungslinien gemeinsame Feeder die einzelnen Fertigungslinien aufeinanderfolgend und artikelbezogen mit Glastropfen unterschiedlichen Gewichts beschickt,
daß bei einer durch Artikelwechsel bedingten Änderung des Glastropfengewichts für eine Fertigungslinie die übrigen Fertigungslinien unverändert im bisherigen Takt mit dem jeweils geforderten Glastropfengewicht gespeist werden,
daß die Einstellung des neuen Glastropfengewichts in einem Schritt oder in einer Mehrzahl von Annäherungsschritten unter Bildung von Fehlportionen durchgeführt wird, und
daß die dem gewechselten Artikel zugeordnete Fertigungslinie dann wieder in Betrieb genommen wird, wenn das neue Glastropfengewicht erreicht ist.

2. Verfahren nach Anspruch 1,
dadurch **gekennzeichnet,**
daß die schrittweise Einstellung des neuen Glastropfengewichts durch Veränderungen des Hubs und/oder der Drehzahl eines mit einem Außengewinde versehenen Plungers des Feeders in Abhängigkeit von mathematischen Gesetzmäßigkeiten vorgenommen wird.

3. Verfahren nach Anspruch 2,
dadurch **gekennzeichnet,**
daß vor erneuter Inbetriebnahme der dem gewechselten Artikel zugeordneten Fertigungslinie zumindest ein für diesen Artikel bestimmter Glastropfen gewogen und das Wiegeergebnis in die Plungersteuerung rückgeführt wird.

4. Verfahren nach einem der vorhergehenden Ansprüche,
dadurch **gekennzeichnet,**
daß während der für einen Formenwechsel in einer Linie benötigten Zeitspanne die Umstellung auf das neue Glastropfengewicht zumindest im wesentlichen zum Abschluß gebracht wird.

5. Verfahren nach einem der vorhergehenden Ansprüche,
dadurch **gekennzeichnet,**
daß über eine für die Gesamtanlage bestimmte Steuerelektronik sowohl die Einstellung der jeweiligen Glastropfengewichte vorgenommen als auch während des Betriebs das jeweilige Sollgewicht der den einzelnen Fertigungslinien zugeordneten Glastropfen in Abhängigkeit von einer Messung des Istgewichts der jeweiligen Glasartikel geregelt wird.

6. Verfahren nach Anspruch 5,
dadurch **gekennzeichnet,**
daß der jeweilige Glasartikel nach dem Pressen gewogen wird.

7. Verfahren nach einem der vorhergehenden Ansprüche,
dadurch **gekennzeichnet,**
daß die Belegung der einzelnen Fertigungslinien mit Artikeln unterschiedlichen Gewichts in Abhängigkeit von der Schmelzkapazität, insbesondere der höchstzulässigen Schmelzkapazität des die Fertigungslinien speisenden Ofens vorgenommen wird.

8. Verfahren nach Anspruch 7,
dadurch **gekennzeichnet,**
daß zur Ausnutzung der optimalen Schmelzkapazität des Ofens alternativ zur Belegung von Fertigungslinien mit Artikeln geringeren oder größeren Gewichts zusätzlich zumindest eine Fertigungslinie aus mehreren produzierenden Fertigungslinien abgeschaltet wird.

9. Vorrichtung zur Durchführung des Verfahrens nach einem oder mehreren der Ansprüche 1 bis 8,
**gekennzeichnet** durch
eine Speisestation mit einem einen steuerbaren Plunger mit Außengewinde aufweisenden Feeder und einer Mehrzahl von insbesondere sternförmig um den Feeder verteilt angeordneten Fertigungslinien mit jeweils einer Einzel-Preßmaschine (1) und nachgeordneter Feuerpoliermaschine (6), wobei jede Einzel-Preßmaschine (1) einen Schiebetisch (4) für die jeweilige Form aufweist und die Form mittels des linear bewegbaren Schiebetisches (4) zentrisch unter den Feeder (1) und nach dem direkten Einspeisen des Glastropfens in die Form in die Preßposition sowie anschließend in eine Entnahmeposition verfahrbar ist.
